# EUROPÄISCHE PATENTSCHRIFT

(11) **EP 0 824 888 B1**
(45) Veröffentlichungstag und Bekanntmachung des Hinweises auf die Patenterteilung: **11.10.2000**
(21) Anmeldenummer: 97114095.9
(22) Anmeldetag: 15.08.1997
(51) Int. Cl.: A47K 3/00, B29C 45/14

(54) **Matte in Form einer Einlage oder Vorlage für sanitäre Einrichtungen**
Mat in the form of an insert or article for sanitary appliances
Tapis sous forme d'un insert ou article pour installations sanitaires

(30) Priorität: 20.08.1996 DE 29614317 U
(43) Veröffentlichungstag der Anmeldung: 25.02.1998
(73) Patentinhaber: Ridder GmbH, 56372 Nassau/Lahn (DE)
(72) Erfinder: Hübinger, Johannes, 56324 Staudt (DE); Ridder, Jürgen, 56377 Nassau (DE)
(74) Vertreter: Hufnagel, Walter, Dipl.-Ing., Dipl.-Wirtsch.-Ing.

(56) Entgegenhaltungen:
- DE-A- 3 028 661
- DE-A- 3 303 993
- GB-A- 884 468
- GB-A- 2 247 168
- US-A- 4 491 556
- PATENT ABSTRACTS OF JAPAN vol. 14, no. 395 (M-1016), 27.August 1990 & JP 02 150321 A (KONBI KK), 8.Juni 1990,

## Beschreibung

Die vorliegende Erfindung bezieht sich auf eine Matte in Form einer Einlage oder Vorlage für sanitäre Einrichtungen gemäß dem Oberbegriff des Anspruchs 1.

Eine Matte gemäß dem Oberbegriff des Anspruchs 1 ist aus der DE 3028661 A1 bekannt. Bei dieser Matte ist ein gitterartiger Träger vorgesehen, an den auf einer Seite Saugnäpfe angebracht sind. Auf der den Saugnäpfen gegenüberliegenden Seite ist eine Auflage aus textilem Material, beispielsweise aus einem Vlies, angebracht. Infolge des gitterartigen Trägers sind Durchbrechungen vorhanden, die zwar vom Vlies überdeckt sind, die aber infolge der Durchlässigkeit des Vlieses ein leichtes, schnelles Absinken, beispielsweise in eine gefüllte Badewanne ermöglichen. Die Durchbrechungen sind von der Auflage deshalb abgedeckt, um die Matte hautfreundlich zu gestalten.

Aus der DE 2414294 A2 ist ebenfalls eine Matte mit einem netzartigen Träger bekannt. Dieser netzartige Träger wird derart mit einem geschäumten Kunststoff umhüllt, daß die Durchbrechungen offen bleiben. Hierdurch soll das nachträgliche Herstellen von Durchbrechungen vermieden und somit eine rationelle Herstellung ermöglicht werden.

Schließlich ist aus dem DE-GM 7721240 eine Matte bekannt, auf dessen Träger ein Reib- oder Reinigungsbelag in Form von biegbaren Zapfen oder Borsten vorgesehen ist. Damit soll beispielsweise die Reinigung oder das Massieren des Rückens beim Duschen oder Baden ermöglicht werden, wobei die Matte mittels angeformter Saugnäpfe an der Badewanne oder an der Wand einer Duschzelle angebracht wird.

Mit der vorliegenden Erfindung soll die Aufgabe gelöst werden, eine Matte der eingangs genannten Art rationell herstellen zu können. Gleichzeitig soll dauerhaft eine sehr gute Haftung zwischen dem Vlies und dem Träger auch bei großer Walkbeanspruchung gewährleistet sein.

Gelöst wird diese Aufgabe durch die im Anspruch 1 angegebenen Merkmale.

Die Erfindung zeichnet sich insbesondere dadurch aus, daß das Vlies eine derart hohe Abreißfestigkeit besitzt, daß eher der Träger eingerissen wird als eine Ablösung des Vlieses vom Träger möglich ist. Dies ist darauf zurückzuführen, daß das Vlies vom thermoplastischen, elastomeren Material sehr großflächig erfaßt wird. Das Elastomer dringt dabei zwar tief in das Vlies ein, durchdringt dieses jedoch nicht, so daß die Antirutscheigenschaft des Vlieses grundsätzlich nicht verloren geht. Auch verliert das Vlies dabei nicht die Fähigkeit, die Bildung von Wasserlachen auf seiner Oberfläche zu verhindern.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1 und 2: je einen Schnitt durch einen Abschnitt einer Matte gemäß der Erfindung in perspektivischer Darstellung, die
- Fig. 3 bis 8: je einen Querschnitt durch einen Mattenabschnitt mit unterschiedlichen Ausführungen der Matte,
- Fig. 9: eine Prinzipskizze einer vorteilhaften zweiteiligen Spritzgießform zum Herstellen der erfindungsgemäßen Matte,
- Fig. 10: ein Formteil mit besonderer Ausbildung der Auflagefläche für das Vlies zur Bildung von Erhebungen und/oder Vertiefungen und
- Fig. 11: ein Formteil mit Halteelementen für das einzusetzende Vlies.

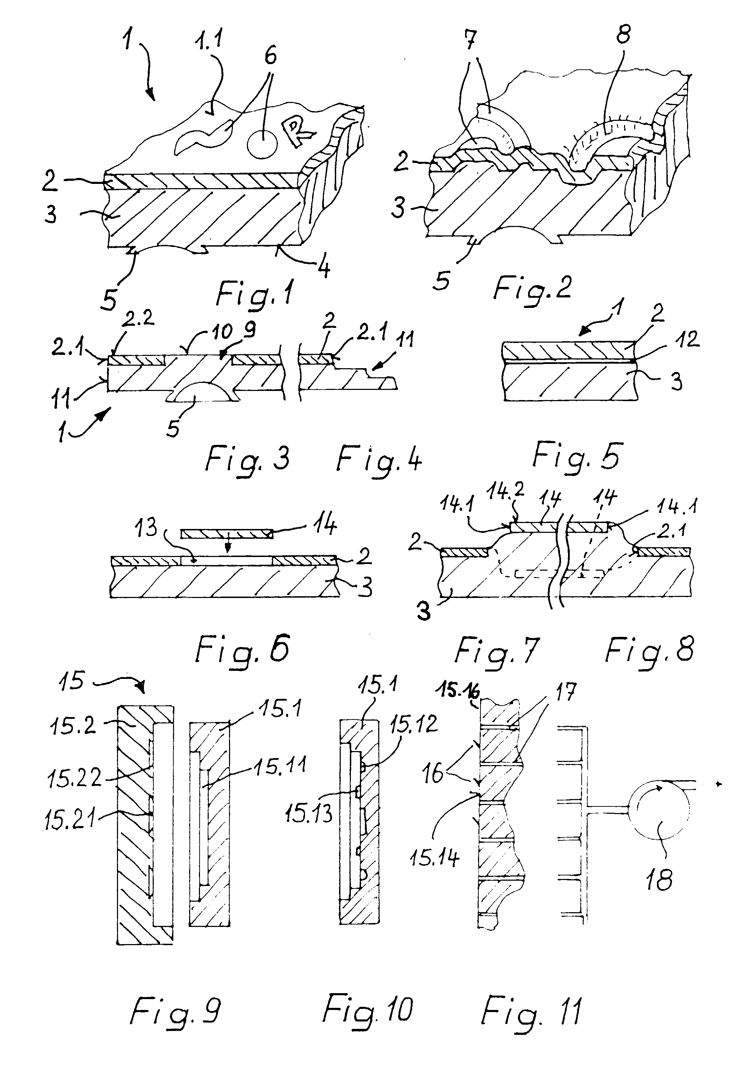

In Fig. 1 ist ein Abschnitt einer Matte 1 dargestellt. Diese besteht aus einem die Oberseite 1.1 bildenden Vlies 2, das mit einem Träger 3 aus einem thermoplastischen Elastomer (TPE) hinterspritzt ist. An der Unterseite 4 des Trägers 3 sind Saugnäpfe 5 angeformt. Diese bilden mit dem Träger 3 eine homogene bauliche Einheit.

Das Vlies 2 kann farblos oder ein- oder mehrfarbig ausgebildet sein. Das Vlies 2 kann auch mit einem oder mehreren Dekor(s) 6, einem oder mehreren Muster(n), einer oder mehreren Graphik(en) oder dgl. bedruckt sein.

Bei dem in Fig. 2 dargestellten Ausführungsbeispiel ist das Vlies 2 nach oben und unten plastisch ausgeformt, so daß sich Erhöhungen 7 und Vertiefungen 8 ergeben. Dies erfolgt während des Hinterspritzens mit dem Träger 3 in der Spritzgießform 15 (siehe Fig. 9 bis 11).

Gemäß einer vorteilhaften Ausgestaltung der Erfindung kann gemäß Fig. 3 das Vlies 2 wenigstens eine Aussparung 9 aufweisen, die vom Material des Trägers 3 ausgefüllt ist. Dadurch erhält die Oberfläche 10 der Matte 1 bevorzugt noch bessere Antirutscheigenschaften als bei Verwendung des Vlieses 2 allein. Bei diesem Ausführungsbeispiel schließt das Vlies 2 mit dem Außenrand 11 der Matte 1 ab, so daß die Stirnfläche 2.1 des Randes 2.2 des Vlieses 2 frei bleibt und mit dem Außenrand 11 fluchtet.

Das Vlies 2 kann jedoch auch kleiner sein als die Mattenabmessungen, so daß ein vom Vlies 2 vollkommen oder zumindest abschnittsweise nicht bedeckter Außenrand 11 der Matte 1 entsteht. Dieser Außenrand 11 kann zusätzlich, wie die Fig. 4 zeigt, nach außen hin und nach unten abgestuft ausgebildet sein.

In vorteilhafter Weiterbildung der Erfindung kann ein Vlies 2 verwendet sein, das - wie an sich bekannt - mit einer heißsiegelfähigen Schicht 12 versehen ist, wie anhand der Fig. 5 veranschaulicht ist. Das Material der heißsiegelfähigen Schicht 12 besitzt vorzugsweise eine Schmelztemperatur, die im Bereich der Schmelztemperatur des Trägermaterials liegt oder vorzugsweise niedriger als diese ist.

Vorteilhaft wird ein solches Vlies 2 verwendet, das aus einem hitzeverfestigten oder hitzeverfestigbaren Material besteht und/oder dieses beispielsweise in Form eines Überzuges oder einer Imprägnierung enthält. Dadurch wird einerseits die Formstabilität des Vlieses 2 bezüglich seiner Flächenform gewährleistet und andererseits die formstabile Herstellung der Erhöhungen 7 und/oder Vertiefungen 8 während des Spritzgießprozesses bei der Herstellung des Trägers 3 ermöglicht.

Eine andere Weiterbildung der Erfindung sieht vor, daß gemäß Fig. 6 das Vlies 2 mit einem Ausschnitt 13 versehen wird, in den zumindest ein Zuschnitt 14 eingelegt ist. Die Form des Ausschnitts 13 und/oder des bzw. der Zuschnitte(s) 14 kann bzw. können verschiedene geometrische oder figürliche Darstellungen besitzen. Der bzw. die Zuschnitt(e) 14 kann bzw. können den Ausschnitt 13 vollkommen oder nur zum Teil ausfüllen und dabei das Vlies 2 berühren oder nicht.

Der bzw. die Zuschnitt(e) 14 kann bzw. können aus einem beliebigen Material bestehen. Vorzugsweise wird jedoch ebenfalls ein Vlies verwendet. Dieses Vlies kann die gleichen oder andere Eigenschaften als diejenigen des Vlieses 2 besitzen. So kann es eine andere Farbe, ein anderes Dekor und/oder eine andere Graphik und/oder eine andere Dicke und/oder eine andere Dichte oder dgl. aufweisen.

Gemäß den in den Fig. 7 und 8 dargestellten Ausführungsbeispielen kann der Zuschnitt 14 erhöht und/oder vertieft ausgeführt bzw. angeordnet sein. Dabei kann die Stirnfläche 14.1 des Randes 14.2 des Zuschnitts 14 nicht vom Material des Trägers 3 umgeben sein, wie Fig. 7 zeigt. Jedoch kann die Stirnseite 14.1 auch von diesem Material abgeschlossen sein oder das Material kann über den Rand 14.1 überstehen.

Die Dicke des Vlieses 2 und/oder des Zuschnitts 14 beträgt etwa 0,1 mm bis 1 mm, insbesondere etwa 0,2 mm bis 0,6 mm.

In der Fig. 9 ist das Prinzip einer zweiteiligen Spritzgießform 15 zur Herstellung einer erfindungsgemäßen Matte 1 dargestellt. In einem ersten Formteil 15.1 ist eine Vertiefung 15.11 von der Größe eines in dieses Formteil 15.1 einzulegenden Vlieses 2 vorgesehen.

Im zweiten Formteil 15.2 sind Vertiefungen 15.21 mit je einer umlaufenden Hinterschneidung 15.22 vorhanden. Diese formen beim Spritzgießvorgang die Saugnäpfe 5.

Das Formteil 15.1 besitzt, vorzugsweise innerhalb der Vertiefung 15.11, weitere Vertiefungen 15.12 und/oder Vertiefungen 15.13, die die Gestalt der Erhöhungen 7 bzw. der Vertiefungen 8 des Vlieses 2 formen.

Damit das Vlies 2 beim Einlegen oder Einsetzen in das Formteil 15.1, insbesondere bei senkrechter Anordnung der Spritzgießform 15, wie dargestellt, seine Lage beibehält, besitzt dessen innere Oberfläche 15.14 zumindest am oberen Rand 15.16 Halteelemente 16, beispielsweise in Form von Nadelspitzen und/oder Haken und/oder Zacken oder dgl.. Die Halteelemente 16 können auch über einen größeren Teil der Oberfläche 15.14 oder über die gesamte Oberfläche 15.14 verteilt vorgesehen sein. Die Halteelemente 16 greifen beim Einsetzen des Vlieses 2 in dieses ein oder durchdringen dieses und fixieren es so in der für den Spritzgießvorgang erforderlichen Lage. Die Länge oder die abstehende Höhe der Halteelemente 16 kann größer gewählt sein als die Dicke des Vlieses 2, so daß sie dieses durchstoßen können. Die auf der anderen Seite herausragenden Enden werden dann in das Material des Trägers 3 eingeformt.

Zusätzlich oder anstelle der Halteelemente 16 und/oder der Vertiefung 15.11 können in wenigstens einem der Formteile 15.1 und/oder 15.2 Absaugöffnungen 17, beispielsweise in Form von Bohrungen, vorgesehen sein. Diese werden an eine Absaugvorrichtung 18, beispielsweise an eine Vakuumpumpe, angeschlossen, so daß beim Anlegen von Unterdruck bzw. Vakuum das Vlies 2 durch den Unterdruck oder zusätzlich durch den Unterdruck gehalten und lagefixiert wird.

## Patentansprüche

1. Matte (1) in Form einer Einlage oder Vorlage für sanitäre Einrichtungen, wie Badewanne, Duschkabine, Waschtisch oder dgl., bestehend aus einem Träger (3) aus einem flexiblen Kunststoff mit an dessen Unterseite (4) vorgesehenen Saugnäpfen (5) und einer auf seiner Oberseite (1.1) vorhandenen Schicht aus einem Vlies (2), dadurch gekennzeichnet, daß der Träger (3) aus einem thermoplastischen Elastomer (TPE) besteht, mit dem das Vlies (2) hinterspritzt ist.

2. Matte nach Anspruch 1, dadurch gekennzeichnet, daß die Saugnäpfe (5) und der Träger (3) eine homogene, bauliche Einheit bilden.

3. Matte nach Anspruch 1 oder 2, dadurch gekennzeichnet, daß das Vlies (2) durch das Hinterspritzen so verformt ist, daß es Erhöhungen (7) und/oder Vertiefungen (8) aufweist.

4. Matte nach einem der Ansprüche 1 bis 3, dadurch gekennzeichnet, daß das Vlies (2) mit einem Dekor und/oder mit einem Muster und/oder mit einer Graphik bedruckt ist.

5. Matte nach einem der Ansprüche 1 bis 4, dadurch gekennzeichnet, daß das Vlies (2) wenigstens eine Aussparung (9) aufweist, die vom thermoplastischen, elastomeren Material des Trägers (3) ausgefüllt ist.

6. Matte nach einem der Ansprüche 1 bis 5, dadurch gekennzeichnet, daß der Außenrand (11) der Matte (1) abschnittsweise oder umlaufend nicht vom Vlies (2) bedeckt ist.

7. Matte nach einem der Ansprüche 1 bis 6, dadurch gekennzeichnet, daß der Außenrand (11) nach außen hin nach unten stufenförmig abgesetzt ist.

8. Matte nach einem der Ansprüche 1 bis 7, dadurch gekennzeichnet, daß das Vlies (2) aus einem hitzeverschweißbaren Material besteht und/oder mit diesem benetzt oder getränkt ist und daß das Vlies (2) hitzeverfestigt ist.

9. Matte nach einem der Ansprüche 1 bis 8, dadurch gekennzeichnet, daß das Vlies (2) auf seiner Rückseite eine heißsiegelfähige Schicht (12) aufweist, auf die das thermoplastische Elastomer aufgespritzt ist.

10. Matte nach Anspruch 9, dadurch gekennzeichnet, daß die heißsiegelfähige Schicht (12) aus einem Thermoplast besteht, dessen Schmelztemperatur im Bereich derjenigen des thermoplastischen Elastomers des Trägers (3) liegt oder niedriger ist als diese.

11. Matte nach einem der Ansprüche 1 bis 10, dadurch gekennzeichnet, daß das Vlies (2) wenigstens einen Ausschnitt (13) besitzt, in den ein Zuschnitt (14) eingelegt und mit dem Träger (3) hinterspritzt ist.

12. Matte nach Anspruch 11, dadurch gekennzeichnet, daß der Zuschnitt (14) aus einem Vlies besteht, das die gleichen oder andere Eigenschaften und/oder Schichtdicke(n) und/oder Dichte(n) aufweist, wie das diese umgebende Vlies (2).

13. Matte nach Anspruch 11 oder 12, dadurch gekennzeichnet, daß der Zuschnitt (14) den Ausschnitt (13) vollkommen ausfüllt.

14. Matte nach einem der Ansprüche 11 bis 13, dadurch gekennzeichnet, daß der Zuschnitt (14) zumindest zum Teil erhöht angeordnet oder geformt ist.

15. Matte nach einem der Ansprüche 11 bis 13, dadurch gekennzeichnet, daß der Zuschnitt (14) zumindest zum Teil vertieft angeordnet oder geformt ist.

16. Matte nach einem der Ansprüche 11 bis 15, dadurch gekennzeichnet, daß die Stirnfläche (14.1) des Randes (14.2) des Zuschnitts (14) freiliegt.

17. Matte nach einem der Ansprüche 11 bis 15, dadurch gekennzeichnet, daß die Stirnfläche (14.1) des Randes (14.2) des Zuschnitts (14) vom Material des Trägers (3) umgeben ist oder über dieses übersteht.

18. Matte nach einem der Ansprüche 1 bis 17, dadurch gekennzeichnet, daß die Dicke des Vlieses (2) und ggf. auch diejenige des Zuschnitts (14) etwa 0,1 mm bis 1 mm, insbesondere etwa 0,2 mm bis 0,6 mm, beträgt.

## Claims

1. Mat (1) in the form of an inlay or cover for sanitary appliances, such as a bathtub, shower cubicle, wash stand or the like, consisting of a carrier (3) made of a flexible plastic with suction cups (5) provided on its underside (4), and a covering made of a fleece (2) provided on its upper side (1.1), characterised in that the carrier (3) is made of a thermoplastic elastomer (TPE) onto which the fleece (2) is moulded.

2. Mat according to claim 1, characterised in that the suction cups (5) and the carrier (3) form a homogeneous structural unit.

3. Mat according to claim 1 or 2, characterised in that the fleece (2) is deformed by the moulding process so that it exhibits elevations (7) and/or depressions (8).

4. Mat according to one of claims 1 to 3, characterised in that the fleece (2) is printed with a decoration and/or with a pattern and/or with a graphic.

5. Mat according to one of claims 1 to 4, characterised in that the fleece (2) exhibits at least one recess (9) which is filled by the thermoplastic elastomer material of the carrier (3).

6. Mat according to one of claims 1 to 5, characterised in that the outer edge (11) of the mat (1) is not covered by the fleece (2) in sections or peripherally.

7. Mat according to one of claims 1 to 6, characterised in that the outer edge (11) is stepped downwards on the outside.

8. Mat according to one of claims 1 to 7, characterised in that the fleece (2) is made of a heat-weldable material and/or is wetted or impregnated with the latter and in that the fleece (2) is solidified by heat.

9. Mat according to one of claims 1 to 8, characterised in that on its back side the fleece (2) exhibits a heat sealable covering (12) onto which the thermoplastic elastomer is moulded.

10. Mat according to claim 9, characterised in that the heat sealable covering (12) is made of a thermoplastic the melting temperature of which lies in the region of that of the thermoplastic elastomer of the carrier (3) or is lower than this.

11. Mat according to one of claims 1 to 10, characterised in that the fleece (2) has at least one cut-out (13) into which a blank (14) is laid and moulded with the carrier (3).

12. Mat according to claim 11, characterised in that the blank (14) is made of a fleece which exhibits the same or different properties and/or covering thickness(es) and/or density(ies) as the fleece (2) surrounding the latter.

13. Mat according to claim 11 or 12, characterised in that the blank (14) fills the cut-out (13) completely.

14. Mat according to one of claims 11 to 13, characterised in that the blank (14) is arranged or formed at least partly elevated.

15. Mat according to one of claims 11 to 13, characterised in that the blank (14) is arranged or formed at least partly depressed.

16. Mat according to one of claims 11 to 15, characterised in that the end face (14.1) of the edge (14.2) of the blank (14) is exposed.

17. Mat according to one of claims 11 to 15, characterised in that the end face (14.1) of the edge (14.2) of the blank (14) is surrounded by the material of the carrier (3) or projects above the latter.

18. Mat according to one of claims 1 to 17, characterised in that the thickness of the fleece (2) and possibly also that of the blank (14) is roughly 0.1 mm to 1 mm, in particular roughly 0.2 mm to 0.6 mm.

## Revendications

1. Nappe (1) sous la forme d'un insert ou d'un tapis pour des installations sanitaires telles que baignoire, cabine de douche, plateau de rinçage ou analogue, composée d'un support (3) en matière plastique souple dont la face inférieure (4) comporte des ventouses (5) et dont la face supérieure (1.1) comporte une couche en un non-tissé (2),
caractérisée en ce que
le support (3) est en un élastomère thermoplastique (TPE) injecté derrière le non-tissé (2).

2. Nappe selon la revendication 1,
caractérisée en ce que
les ventouses (5) et le support (3) forment un ensemble homogène.

3. Nappe selon l'une des revendications 1 ou 2,
caractérisée en ce que
le non-tissé (2) est déformé par injection au niveau de sa face arrière, pour avoir des bossages (7) et/ou des cavités (8).

4. Nappe selon l'une quelconque des revendications 1 à 3,
caractérisée en ce que
le non-tissé (2) est imprimé avec un décor et/ou un modèle et/ou un graphisme.

5. Nappe selon l'une quelconque des revendications 1 à 4,
caractérisée en ce que
le non-tissé (2) comporte au moins une découpe (9) remplie par la matière élastomère thermoplastique du support (3).

6. Nappe selon l'une quelconque des revendications 1 à 5,
caractérisée en ce que
le bord extérieur (11) de la nappe (1) n'est pas recouvert par le non-tissé (2), par segment ou de manière périphérique.

7. Nappe selon l'une quelconque des revendications 1 à 6,
caractérisée en ce que
le bord extérieur (11) est décroché par gradins, vers l'extérieur et vers le bas.

8. Nappe selon l'une quelconque des revendications 1 à 7,
caractérisée en ce que
le non-tissé (2) est en une matière thermosoudable et/ou est mouillé ou imprégné de celle-ci, et le non-tissé (2) est rendu réfractaire.

9. Nappe selon l'une quelconque des revendications 1 à 8,
caractérisée en ce que
le non-tissé (2) présente sur son côté arrière, une couche (12) thermoscellable, sur laquelle est projeté un élastomère thermoplastique.

10. Nappe selon la revendication 9,
caractérisée en ce que
la couche thermoscellable (12) est en matière thermoplastique dont la température de fusion se situe dans le domaine de celle de l'élastomère thermoplastique du support (3) ou est inférieure à celle-ci.

11. Nappe selon l'une quelconque des revendications 1 à 10,
caractérisée en ce que
le non-tissé (2) comporte au moins une découpe (13) recevant un flanc découpé (14) et le support (3) reçoit avec celui-ci une projection par la face arrière.

12. Nappe selon la revendication 11,
caractérisée en ce que
le flanc découpé (14) est en un non-tissé ayant des propriétés identiques ou différentes et/ou des épaisseurs de couche et/ou des densités identiques ou différentes de celles du non-tissé environnant (2).

13. Nappe selon la revendication 11 ou 12,
caractérisée en ce que
le flanc découpé (14) remplit complètement la découpe (13).

14. Nappe selon l'une quelconque des revendications 11 à 13,
caractérisée en ce que
le flanc découpé (14) est au moins en partie surélevé ou mis en forme.

15. Nappe selon l'une quelconque des revendications 11 à 13,
caractérisée en ce que
le flanc découpé (14) est au moins en partie en creux ou mis en forme.

16. Nappe selon l'une quelconque des revendications 11 à 15,
caractérisée en ce que
la face frontale (14.1) du bord (14.2) du flanc découpé (14) est dégagée.

17. Nappe selon l'une quelconque des revendications 11 à 15,
caractérisée en ce que
la surface frontale (14.1) du bord (14.2) du flanc découpé (14) est entourée par la matière du support (3) ou déborde de celle-ci.

18. Nappe selon l'une des revendications 1 à 17,
caractérisée en ce que
l'épaisseur du non-tissé (2), et le cas échéant également celle du flanc découpé (14), est de l'ordre de 0,1 mm à 1 mm et notamment de l'ordre de 0,2 mm à 0,6 mm.
